# EUROPÄISCHE PATENTSCHRIFT

(11) **EP 3 738 904 B1**
(45) Veröffentlichungstag und Bekanntmachung des Hinweises auf die Patenterteilung: **20.08.2025**
(21) Anmeldenummer: 20164620.5
(22) Anmeldetag: 20.03.2020
(51) Int. Cl.: B65D 90/10, B65D 90/58, B65D 90/62, B60P 3/22

(54) **BEHÄLTER MIT EINEM DOMDECKEL ZUM VERSCHLIESSEN EINER ÖFFNUNG DES BEHÄLTERS, UND FAHRZEUG DAMIT**
CONTAINER WITH A DOME COVER FOR CLOSING AN OPENING OF THE CONTAINER, AND VEHICLE THEREWITH
CONTENEUR AVEC UN COUVERCLE EN DÔME DESTINÉ À FERMER UNE OUVERTURE DU CONTENEUR, ET VÉHICULE MUNI D'UN TEL SYSTÈME

(30) Priorität: 26.04.2019 DE 202019102372 U
(43) Veröffentlichungstag der Anmeldung: 18.11.2020
(73) Patentinhaber: Feldbinder Spezialfahrzeugwerke GmbH, 21423 Winsen/Luhe (DE)
(72) Erfinder: KLEY, Wolf-Dietrich, 21423 Winsen/Luhe (DE)
(74) Vertreter: RGTH

(56) Entgegenhaltungen:
- EP-B1- 1 917 162
- WO-A1-97/42437
- DE-U- 1 907 290
- ES-B2- 2 346 507
- JP-A- S6 261 849
- US-A1- 2002 100 225
- US-A1- 2005 166 458
- US-A1- 2008 078 127

## Beschreibung

Die Erfindung betrifft einen Behälter mit Domdeckel zum Verschließen einer Öffnung des Behälters, wobei der Behälter insbesondere auf einem Fahrzeug oder Fahrgestell montiert ist oder montierbar ist.

### Stand der Technik

Ein solcher Domdeckel ist beispielsweise bekannt zum Verschließen von Einfüllstutzen oder Mannlöchern von befüllbaren Behältern, beispielsweise von einem Silobehälter oder einem Tank, welche auf einem Fahrzeug, auch einem Schienenfahrzeug oder Anhänger oder auf einem anderen Fahrgestell montiert sein können.

Ein Deckel beziehungsweise eine Schließeinrichtung wird auch in der EP 1 917 162 B1 beschrieben. Die beschriebene Schließeinrichtung für das Verschließen eines Einfüllstutzens eines Behälters geeignet, wobei sie beim Verschließen geschwenkt werden kann. Zudem besitzt die Schließeinrichtung eine Dichtung, welche in geschlossenem Zustand den Einfüllstutzen abdichtet.

In der ES 2 346 507 B1 wird ein Dichtungssystem für einen Behälter mit einer pneumatischen Dichtung beschrieben. Das Dichtungssystem beziehungsweise der Deckel, welcher ein Teil davon ist, kann parallel zur Mündung des Behälters, also horizontal zum Behälter bewegt werden. Im Deckel ist eine Nut eingelassen in welcher sich eine aufblasbare Dichtung befindet. Ein L-förmiger Aufsatz auf dem Behälter, unter welchen der Deckel eingeschwenkt werden kann, fungiert als Greifer, um eine vertikale Bewegung des Deckels in geschlossenem Zustand zu verhindern.

In der EP 3 168 507 A1 wird eine Luke, welche eine Öffnung in einem Tank verschließt, beschrieben. Die Luke ist an einer äußeren Struktur befestigt, welche die Luke auch heben kann. Im geschlossenen Zustand wird die Luke mit einer Dichtung abgedichtet. Die Dichtungen sind in Ausnehmungen eingelassen und mit Druck beaufschlagbar. Für eine optimale Abdichtung kann das Verschlusselement mittels Druckfedern an die Öffnung des Behälters abgesenkt und angedrückt werden, zudem kann die Dichtung unter Druck gesetzt werden. Der Schwenkmechanismus hat dabei keine Führungsschiene, ist also freischwebend jedoch nicht vertikal verstellbar.

Die US 2002/100 225 A1 beschreibt einen aus der Ferne steuerbaren Deckel für eine Tankbehälteröffnung, welcher mit einer Dichtung versehen ist und mit einem oder mehreren Flanschen verschlossen werden kann. In die Dichtung kann von einer Steuerung Luft gefüllt und entlassen werden, um im geschlossenen Zustand den Tankbehälter bestmöglich zu verschließen. Dazu wird die dehnbare Dichtung aus ihrer sonst beispielsweise rechteckigen Aufnahmenut herausgepresst (Figuren 7 und 8).

In der JP S62 61 849 A wird ein Deckel beschrieben, welcher mit einer aufblasbaren Dichtung versehen ist. Beim Verschließen des Deckels wird die Dichtung soweit aufgeblasen, dass der Deckel dicht mit einem Flansch abschließt. Die Dichtung befindet sich dabei in einer Rille im Deckel.

Die WO 97/42 437 A1 offenbart einen Deckel für eine Öffnung eines Behälters, welcher auf einer Schiene zwischen einem offenen und einem geschlossenen Zustand hin und her geschwenkt werden kann. Im geschlossenen Zustand greifen Halter ineinander, um den Deckel auf dem Rand der Öffnung zu befestigen. Dabei kann der Deckel automatisch zwischen den beiden Positionen verschoben werden. Zudem wird auch eine aufblasbare Dichtung offenbart, welche zwischen dem Deckel und dem Rand der Öffnung angebracht ist und im geschlossenen Zustand aufgeblasen wird, um die Öffnung dicht zu verschließen.

In der DE 19 07 290 U wird ein in seiner eigenen Ebene schwenkbarer Klappdeckel beschrieben, welcher insbesondere auf Tankfahrzeugen zum Einsatz kommen kann. In der Druckschrift ist ebenfalls eine Dichtung beschrieben, welche durch anspannen einer Spannmutter in geschlossenem Zustand die Stirnseite des Doms gegenüber dem Deckel abdichtet.

Die US 2008/078 127 A1 zeigt ein Mannloch, welches von einem schwenkbaren Deckel verschlossen wird. Der Schwenkdeckel ist dabei im offenen Zustand freischwebend. Der Deckel kann horizontal zwischen einer geschlossenen und offenen Position bewegt werden. Die Dichtung des Deckels, welche an dessen Unterseite befestigt ist, kann zum besseren Verschließen per Fernsteuerung mit Druck beaufschlagt werden. Am Rand der Öffnung sind Haken angebracht, in die der Deckel eingeschwenkt werden kann, sodass er im geschlossenen Zustand festgehalten wird und sich nicht nach oben bewegen kann.

Die US 2005/166 458 A1 beschreibt ein ferngesteuertes Tankdeckelsystem, wobei der Deckel horizontal zur Seite geschwenkt werden kann. Ein Haken (in welchen der Deckel im geschlossenen Zustand eingeschwenkt werden kann ist ebenfalls offenbart. Der Deckel wird mit einer Federanordnung nach oben gedrückt, sodass er im geöffneten Zustand zur Seite geschwungen werden kann. Ein aufblasbarer Gummiring (66, 66a) dient zum abdichten des Systems in geschlossenem Zustand.

In den Beschreibungen der Domdeckel, Luken und Verschlusseinheiten im Stand der Technik sind diese jedoch bisher nicht sowohl schwenkbar als auch klappbar ausgeführt. Eine schwenkbare Ausführung ist vorteilhaft, wenn man platzsparend, vor allem in Richtung oberhalb des Behälters, den Behälter öffnen und verschließen möchte, da hierbei nur ein relativ schmaler Bereich oberhalb des Behälters benötigt wird und ein Einfüllvorgang in den Behälter nicht durch einen aufgestellten Deckel eingeschränkt wird. Ein klappbarer Deckel hat den Vorteil, dass Wartungsarbeiten am Deckel, beispielsweise das Wechseln einer Dichtung, einfacher ausgeführt werden können, da man ungehindert Zugriff zur Unterseite des Deckels hat. Es ist jedoch kein Mechanismus bekannt, welcher beide Vorteile gemeinsam integriert und dabei mit einem Mechanismus die jeweiligen Nachteile der Öffnungsverfahren kompensiert. Des Weiteren sind die im Stand der Technik aufgefundenen Dichtungen nicht darauf ausgelegt, eine möglichst reibungsfreies Verschließen des Deckels möglich zu machen, um das Material der Dichtung zu schonen. Das zuverlässige, schnelle und sichere Verschließen und Abdichten eines Behälters mit Hilfe eines Domdeckels kann durch die in der vorliegenden Erfindung beschriebenen Merkmale verbessert werden.

### Darstellung der Erfindung: Aufgabe, Lösung, Vorteile

Der Erfindung liegt die Aufgabe zugrunde, bei einem Domdeckel der eingangs genannten Art Verschließ- und Dichtungsmechanismus dahingehend zu verbessern, dass der Behälter schneller, sicherer und zuverlässiger verschlossen und abgedichtet werden kann. Dadurch besitzt der Domdeckel zum Verschließen einer Öffnung eines Behälters einen Mechanismus, wodurch das Domdeckeloberteil schwenkbar und klappbar an der Öffnung des Behälters befestigt ist.

Der Behälter kann dabei ein Tank, eine Tonne, ein Container oder ein andersartiges Gefäß sein, welches auf ein Straßen- und/oder Schienenfahrzeug, einen Anhänger, einen Wagen oder ein anderes bewegliches Gestell montiert sein kann oder montierbar ist. Dabei kann der Behälter zum Transport von Waren geeignet sein, vorzugsweise für Schüttgut, pulverförmige oder körnige Materialien, aber auch von Flüssigkeiten.

Die Öffnung des Behälters kann ein Einfüllstutzen oder ein Mannloch sein oder eine andere Öffnung im Behälter, die zum Befüllen, Entleeren oder Warten des Behälters verwendet werden kann. Dabei kann die Öffnung an der Oberseite des Behälters angebracht sein, wie beispielsweise bei einem Tank, welcher von oben befüllt wird. Andernfalls kann die Öffnung jedoch auch an der Seite oder an der Unterseite des Behälters angebracht sein, entweder zum Entleeren oder um einen besseren Zugang zum Behälter zu bekommen. Die Größe der Öffnung kann dabei unterschiedlich sein, beispielsweise ist zum Befüllen oder Entleeren von kleinteiligen Materialien eine kleinere Öffnung nötig, als zur Wartung des Behälters, falls dort eine Person hindurchpassen muss. Erfindungsgemäß ist die Öffnung des Behälters jedoch immer mit einem Deckel, einer Luke oder einem anderen beweglichen Teil verschließbar.

Der Domdeckel beziehungsweise die Vorrichtung, welche die Öffnung des Behälters verschließt, umfasst dabei erfindungsgemäß einen schwenkbaren Domdeckeloberteil, welches parallel zur Oberfläche des Behälters bewegbar ist. Das Domdeckeloberteil ist also am Rand der Öffnung angeordnet und horizontal verdrehbar und/oder verschiebbar. Erfindungsgemäß ist das Domdeckeloberteil zusätzlich klappbar, also um eine horizontale Achse schwenkbar, sein, was heißt, dass im Vergleich zur Behälteroberfläche das Domdeckeloberteil vertikal gestellt werden kann. Dazu ist das Domdeckeloberteil am Rand der Öffnung befestigt und kann von dort aus aufgestellt beziehungsweise aufgeklappt werden. Beim Aufstellen und/oder Aufklappen wird das Domdeckeloberteil also um eine Achse geschwenkt, sodass es vertikal zur Behälteroberfläche steht. Dabei kann der Deckel auch um mehr als 90° geklappt werden, sodass er in einer geöffneten Stellung steht.

Erfindungsgemäß ist im äußeren Randbereich der Unterseite des Domdeckeloberteils eine Dichtung angeordnet, welche die Öffnung im geschlossenen Zustand abdichtet. Die Dichtung kann dabei umlaufend am Domdeckelrand angeordnet sein, was heißt, dass auf der Unterseite des Domdeckeloberteils in einem geringen Abstand vom Domdeckelrand die Dichtung in Form der Öffnung oder in Form des Domdeckelrandumfangs angeordnet ist. Besonders bevorzugt ist die Dichtung dabei an der Stelle angeordnet, an der sich das Domdeckeloberteil und der Rand der Öffnung berühren, wo also im geschlossenen Zustand die Unterseite des Domdeckeloberteils auf dem Behälter beziehungsweise dem Rand dessen Öffnung aufliegt.

Erfindungsgemäß verfügt der Domdeckel über ein Drehgelenk, welches mit einem Schwenkarm verbunden ist, über welchen das Domdeckeloberteil mit dem Behälter verbunden ist, wobei im Drehgelenk ein, insbesondere doppelreihiges, Schrägkugellager ausgebildet ist. Das Domdeckeloberteil kann dabei über das Drehgelenk seitlich, also horizontal zur Behälteroberfläche, verschwenkt werden. Entweder kann das Domdeckeloberteil auch über dieses Gelenk geklappt werden, das heißt vertikal zur Behälteroberfläche aufgestellt werden, bevorzugt besitzt der Domdeckel jedoch noch einen separaten Schwenkmechanismus für das vertikalstellen des Domdeckeloberteils. Erfindungsgemäß ist dabei am Schwenkmechanismus für die vertikale Position ein Endanschlag angeordnet, welcher verhindert dass das Domdeckeloberteil zu weit ausgelenkt wird. Üblicherweise wird bei einem Drehgelenk eines Schwenkarms eines Domdeckels für das horizontale verschwenken des Domdeckeloberteils statt einem Schrägkugellager, wie in der vorliegenden Erfindung, eine Gleithülse verwendet. Das Schrägkugellager bietet jedoch eine bessere Belastbarkeit in axialer und radialer Richtung. Das Drehgelenk ist dabei am Behälter beziehungsweise am Rand der Öffnung des Behälters befestigt und mit der anderen Seite mit dem Schwenkarm verbunden, welcher am Domdeckeloberteil festgemacht ist, und verbindet dabei das Domdeckeloberteil mit dem Behälter, bzw. mit dem Rand der Öffnung des Behälters. Vorzugsweise schwenkt das Drehgelenk dabei das Domdeckeloberteil über einen Schwenkarm um mindestens 90° aus.

Erfindungsgemäß ist dabei der Schwenkmechanismus des Domdeckels verstellbar ausgebildet, damit beim Verschleiß der Dichtung eine Nachsteuerbarkeit gegeben ist. Sollte im Verlaufe der Lebenszeit des Domdeckels die Dichtung verschleißen, kann der Schwenkmechanismus entsprechend angepasst werden, um trotzdem einen sicheren Verschluss der Öffnung des Behälters sicherzustellen. Dabei kann beispielsweise der Abstand zwischen Domdeckeloberteil und dem Rand der Öffnung verringert werden, oder die Position des Domdeckeloberteils im geschlossenen Zustand kann nachjustiert werden, bis ein gewisser Druck auf der Dichtung gegeben ist.

Bevorzugterweise ist die Dichtung dabei zumindest teilweise in eine Aufnahmenut auf der Unterseite des Domdeckeloberteils eingelassen. Das heißt, dass das Domdeckeloberteil auf seiner Unterseite eine Aufnahmenut aufweist, welche breit genug ist, dass zumindest ein Teil der Dichtung darin Platz hat. Bevorzugterweise verläuft die Aufnahmenut dabei im Randbereich des Domdeckeloberteils, wobei sie bevorzugt parallel zum Umfang des Domdeckeloberteils verläuft und/oder an der Stelle platziert ist an der die Unterseite des Domdeckeloberteils den Rand der Öffnung berührt. In der Aufnahmenut kann dabei die Dichtung platziert werden, sodass die Dichtung zum Teil von der Unterseite des Domdeckeloberteils hervorsteht, jedoch zumindest ein Teil der Dichtung in der Aufnahmenut des Domdeckeloberteils verschwindet. Letzteres ist der Fall, wenn die Aufnahmenut weniger tief ist als die Dichtung hoch ist.

Bevorzugterweise kann die Innenoberfläche der Aufnahmenut in seiner Form grob der Außenoberfläche der Dichtung entsprechen. Insbesondere hat die Außenoberfläche der Dichtung auf der dem Domdeckeloberteil zugewandten Seite, welche die im Domdeckeloberteil eingelassene Seite ist, die gleiche Form wie die Aufnahmenut, in welcher die Dichtung platziert wird. Das führt dazu, dass die Dichtung möglichst gut am Domdeckeloberteil anliegt. Hierbei sind auch unterschiedliche Außenoberflächen für die Dichtung möglich, was also heißt, dass auch die Aufnahmenut unterschiedliche Innenoberflächen aufweisen kann. Bevorzugterweise sind die Aufnahmenut und/oder die Dichtung zumindest teilweise abgerundet. Oberflächenformen, welche von einer monoton gekrümmten Oberfläche abweichen sind auch möglich, beispielsweise wenn die Aufnahmenut Rillen oder Vertiefungen hat, in die Hervorhebungen, Haken oder Noppen, welche an der äußeren Oberfläche der Dichtung angeordnet sind, eingreifen oder anliegen können, damit die Dichtung im eingesetzten Zustand schwerer verrutscht und besser anliegt beziehungsweise befestigt ist. Besonders bevorzugt kann die Dichtung für einen besseren Halt im Domdeckeloberteil auch in die Aufnahmenut eingeklebt und/oder eingeklemmt werden.

Besonders bevorzugt weist die Dichtung des Domdeckels einen hohlen Querschnitt auf. Dabei kann die Dichtung auf der Innenoberfläche auf einer Seite konkav geformt sein und auf der gegenüberliegenden Seite konvex ausgebildet sein. Besonders bevorzugt ist dabei die Außenoberfläche auf der Seite der Dichtung, welche in die Unterseite des Domdeckeloberteils eingelassen ist, so geformt, dass sich die Dichtung gut an die Form der Aufnahmenut anschmiegt, die Dichtung ist also auf der Außenseite und auf der Innenseite in Richtung Aufnahmenut gewölbt. Speziell ist dies auch im gedehnten oder aufgeblasenen Zustand der Dichtung der Fall. Auf der gegenüberliegenden Seite, welche zur Öffnung beziehungsweise zum Rand der Öffnung des Behälters zeigt, ist die Dichtung bevorzugt nach innen, also zur Unterseite des Domdeckeloberteils hin, gewölbt. Hier kann die Oberfläche auf der Außenseite und der Innenseite der Dichtung auch unterschiedliche Krümmungen aufweisen, bis hin zu unterschiedlichen Krümmungsrichtungen, wenn beispielsweise die Oberfläche der Dichtung auf der Innenseite zum Domdeckeloberteil hin und auf der Außenseite zum Rand der Öffnung hin gekrümmt ist. Besonders bevorzugt ist bei einer Dichtung mit hohlem Querschnitt der Raum im Innern der Dichtung durchgängig verbunden. Bevorzugterweise ist die Dichtung über- und unterdruckfest, wenn sich Gas im Innern der Dichtung befindet.

Vorzugsweise ist dabei die Dichtung über eine Anschlussleitung mit einer Luftversorgung verbunden, welche mit einer Steuerung verbunden ist, mittels derer die Luftversorgung in der Dichtung Druck aufbauen und reduzieren kann. Bevorzugterweise wird dabei der Druck in der Dichtung reduziert, wenn das Domdeckeloberteil bewegt wird, und Druck aufgebaut, wenn sich das Domdeckeloberteil im geschlossenen Zustand über der Öffnung befindet. Das hat zur Folge, dass beim Verschwenken des Domdeckeloberteils die Dichtung nicht über den Rand der Öffnung schleift, und diesen bevorzugt auch nicht berührt, und somit kein Verschleiß an der Dichtung entsteht. Der Druck kann beispielsweise dadurch aufgebaut und reduziert werden, dass ein Gas, insbesondere Luft, in die Dichtung eingepumpt oder eingeblasen wird beziehungsweise ausgelassen oder herausgesaugt wird. Die Steuerung der Gasversorgung kann dabei zentral von einem Steuergerät des Fahrzeuges, auf welchem der Behälter montiert ist, gesteuert werden. Alternativ kann die Gasversorgung der Dichtung jedoch auch über ein Paneel direkt an der Öffnung des Behälters oder am Behälter selbst gesteuert werden, beispielsweise gemeinsam mit der Bewegung des Domdeckeloberteils. Besonders bevorzugt reduziert die Steuerung automatisch vor der Bewegung des Domdeckeloberteils in einen geöffneten oder aufgeklappten Zustand den Druck in der Dichtung, sodass sichergestellt ist, dass das Domdeckeloberteil nicht in einem Zustand bewegt wird, in welchem die Dichtung schleifen könnte.

Vorzugsweise wird die Dichtung vor dem Öffnen und/oder Verschwenken des Domdeckeloberteils über die Steuerung mit Unterdruck beaufschlagt, sodass sich die Dichtung in die Aufnahmenut an der Unterseite des Domdeckeloberteils zurückzieht. Dadurch ist weder eine Abdeckung für die Dichtung noch ein Flansch, der die Dichtung schützt, nötig da durch das Zurückziehen der Dichtung in die Aufnahmenut an der Unterseite des Domdeckeloberteils, die Reibung beim Verschwenken und/oder Öffnen des Domdeckeloberteils vermindert oder ganz verhindert wird. Besonders bevorzugterweise zieht sich die Dichtung vollständig in die Aufnahmenut an der Unterseite des Domdeckeloberteils zurück, bevor das Domdeckeloberteil bewegt wird.

Bevorzugterweise ist der Domdeckel derart ausgebildet, dass das Domdeckeloberteil zur Wartung aufstellbar ist, beziehungsweise aufgestellt werden kann, wobei die Dichtung in der aufgestellten Position des Domdeckeloberteils überprüft und/oder getauscht werden kann. Die Dichtung ist dabei derart ausgebildet oder kann derart ausgebildet sein, dass sie im aufgestellten Zustand des Domdeckeloberteils leicht entfernt werden kann, beispielsweise wenn die Dichtung mit wenigen Handgriffen aus dem Domdeckeloberteil herausnehmbar ist. Dies ist speziell dann der Fall, wenn die Dichtung durch Hervorhebungen an der Außenseite der Oberfläche in Vertiefungen der Aufnahmenut eingeklemmt werden kann, welche jedoch leicht zu lösen sind, beispielsweise wenn die Dichtung zusammengedrückt wird.

Bevorzugterweise kann das Domdeckeloberteil im aufgestellten Zustand auch mit einer Überladesicherung ausgestattet sein, welche bei großem Druck auf das Domdeckeloberteil diesen zusätzlich ausschwenkt, falls das Domdeckeloberteil versehentlich im Weg ist und andernfalls die Befestigung des Domdeckeloberteils im ausgeklappten Zustand Schaden nehmen könnte. Beispielsweise kann dies während einem Beladen stattfinden, falls dabei das Domdeckeloberteil versehentlich im ausgeklappten und nicht im aufgeschwenkten Zustand ist. Alternativ dazu kann sichergestellt werden, dass im aufgeklappten Zustand des Domdeckeloberteils keine Beladung stattfindet, indem die Öffnung des Domdeckeloberteils anderweitig gesichert ist, beispielsweise verschlossen ist, und keine Beladung zulässt.

Besonders bevorzugt halten das Drehgelenk und der Schwenkarm das Domdeckeloberteil dabei frei schwebend, das heißt das Domdeckeloberteil benötigt keine Führungsschiene für die Verschwenkung. Der Schwenkarm des Domdeckels ist dabei so konzipiert, dass dieser das Domdeckeloberteil in geöffnetem Zustand horizontal zur Behälteroberfläche frei halten kann. Dadurch ist keine Führungsschiene für das Domdeckeloberteil erforderlich beziehungsweise auch kein Zahnrad oder ein anderer Haltemechanismus für das Domdeckeloberteil im geöffneten Zustand.

Besonders bevorzugt verfügen das Drehgelenk und/oder der Schwenkarm des Domdeckels dabei über einen pneumatischen oder elektrischen Antrieb. Der pneumatische oder elektrische Antrieb des Drehgelenks beziehungsweise des Schwenkmechanismus ist dabei bevorzugt seitlich außen am Rand der Öffnung angebracht, besonders bevorzugt direkt neben dem Drehgelenk.

In einer bevorzugten Ausführungsform weißt der Domdeckel am Rand mindestens einen überstehenden Greifer auf, welcher im geschlossenen Zustand des Domdeckeloberteils in eine Ausnehmung am Rand der Öffnung greift. Bevorzugterweise sind dabei mindestens zwei Greifer am Rand des Domdeckeloberteils fix befestigt. Diese sind dabei unterseitig am Domdeckeloberteil befestigt. Ebenso kann der Domdeckel alternativ oder zusätzlich am Rand der Öffnung des Behälters mindestens einen Greifer aufweisen, unter welche der Domdeckelrand beim Verschließen einschwenken kann. Bevorzugterweise sind dabei mindestens zwei Greifer am Rand der Öffnung fix befestigt. Besonders bevorzugt halten diese im geschlossenen Zustand des Domdeckeloberteils diesen partiell an der Oberseite des Domdeckeloberteils, insbesondere an eigen dafür verbreiterten Randbereichen des Domdeckeloberteils. Beim Einschwenken des Domdeckeloberteils bewegen sich die Greifer dabei vorzugsweise nicht, sondern das Domdeckeloberteil schwenkt unterhalb der an der Öffnung oder am Rand der Öffnung befestigten Greifer ein, welche unbeweglich befestigt sind, und die Greifer des Domdeckeloberteils werden in die Ausnehmungen am Rand der Öffnung des Behälters hineinbewegt, ohne sich dabei selbst zu bewegen.

Die Greifer können dabei starr sein, sich also nicht bewegen beziehungsweise auch nicht aus mehreren ineinandergreifenden Teilen bestehen. An jeder Position ist dabei bevorzugterweise nur ein Greifer, welcher entweder am Domdeckeloberteil oder am Rand beziehungsweise dem Stutzen der Öffnung befestigt sein kann. Dies verhindert ebenfalls das Ineinandergreifen zweier Greifer beziehungsweise Klauen. Bevorzugterweise ist der Greifer aus einem Strangpressprofil gefertigt, welches einen U-förmigen beziehungsweise hakenförmigen Querschnitt hat. Der Greifer kann dabei einfach vom Strangpressprofil abgeschnitten und etwas abgerundet werden und anschließend am Rand der Öffnung beziehungsweise dem Stutzen der Öffnung oder außen am Domdeckelrand aufgebracht werden. Besonders bevorzugt werden die Greifer dabei am Domdeckeloberteil bzw. am Rand der Öffnung angeschweißt. Die Ausnehmung am Rand der Öffnung beziehungsweise am Stutzen der Öffnung des Behälters kann dabei auch hervorstehend sein, also einen Vorsprung darstellen, welcher eine Vertiefung aufweist.

Des Weiteren umfasst die Erfindung gemäß Anspruch 1 einen Behälter mit einem Domdeckel mit den oben beschriebenen Merkmalen.

Außerdem umfasst die Erfindung ein Fahrzeug, welches mit einem oben beschriebenen Behälter und Domdeckel ausgestattet ist.

### Kurze Beschreibung der Zeichnungen

Einige bevorzugte Ausführungsbeispiele der Erfindung werden in den folgenden Zeichnungen beispielhaft erläutert. Es zeigen schematisch:
- Figur 1: eine Draufsicht auf einen Domdeckel mit Kragen,
- Figur 2: einen Schnitt durch einen Rand einer Öffnung eines Behälters und einen Domdeckel mit Dichtung (Schnitt A-A aus Figur 1),
- Figur 3: einen vergrößerten Ausschnitt eines Schwenk- und Klappmechanismus eines Domdeckels in geschlossenem Zustand,
- Figur 4: einen Domdeckel in geöffnetem Zustand mit Schwenkmechanismus, und
- Figur 5: einen Domdeckel in aufgeklapptem Zustand.

### Bevorzugte Ausführungsformen der Erfindung

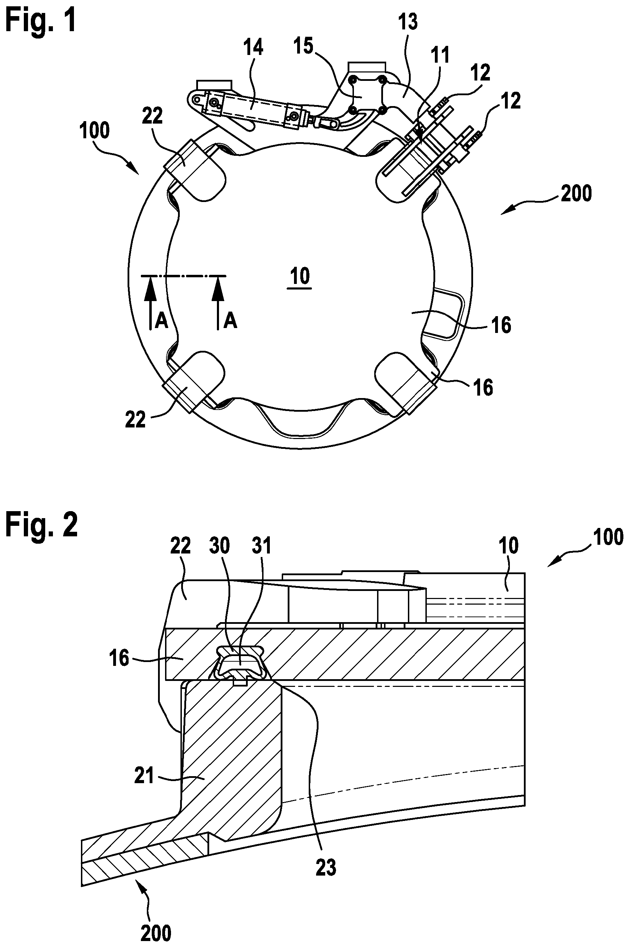

Figur 1 zeigt eine Draufsicht auf einen Domdeckel 100, dessen Domdeckeloberteil 10 eine Öffnung 20 (in Figur 1 nicht dargestellt) eines Behälters 200 verschließt. Das Domdeckeloberteil 100 verdeckt dabei in geschlossenem Zustand die Öffnung 20 des Behälters 200 vollständig. Das Domdeckeloberteil 10 ist über einen Schwenkmechanismus 11 und Schwenkarm 13 mit dem Behälter 200 verbunden. Der Schwenkmechanismus 11 dient zum Klappen des Domdeckeloberteils 10 in einen zur Behälteroberfläche vertikalen Zustand, und verfügt über einen Endanschlag 12. Der Endanschlag 12 verhindert ein zu weites Auslenken des Domdeckeloberteils 10 im ausgeklappten Zustand. Der Schwenkmechanismus 11 ist zudem an einem Schwenkarm 13 befestigt, wobei der Schwenkarm 13 das Domdeckeloberteil 10 horizontal zur Oberfläche des Behälters 200 verschwenken kann. Dabei kann im geöffneten Zustand der Schwenkarm 13 das Domdeckeloberteil 10 halten, ohne einen zusätzlichen Verschiebemechanismus zu benötigen. Der Schwenkarm 13 besitzt dabei zudem ein doppelreihiges Schrägkugellager 15. Der Schwenkarm 13 und der Schwenkmechanismus 11 können über einen pneumatischen Antrieb 14 bewegt werden. Am Domdeckeloberteil 10 oder am Rand der Öffnung 21 können dabei Greifer 22 befestigt sein. Die Greifer sind dabei starr angebracht und nicht alleine beziehungsweise unabhängig vom Domdeckeloberteil 10 und dem Rand der Öffnung 21 bewegbar. Der Domdeckelrand 16 schwenkt dabei beim Verschließen der Öffnung 20 mit dem Domdeckeloberteil 10 in die Greifer des Rands der Öffnung 21 ein, sodass diese das Domdeckeloberteil 10 an der Oberseite vor einem Aufklappen schützen.

Figur 2 zeigt einen Schnitt durch den Domdeckel 100 und dem Rand oder dem Stutzen der Öffnung 21 eines Behälters 200 von den Punkten A bis A (siehe Figur 1). Das Domdeckeloberteil 10 wird von einem Greifer 22 umfasst, welcher am Rand der Öffnung 21 angebracht ist. An der Auflagefläche des Domdeckeloberteils 10 auf dem Rand der Öffnung 21 ist eine Aufnahmenut 23 an der Unterseite des Domdeckeloberteils 10 angeordnet. Die Aufnahmenut 23 hat dabei eine Innenoberfläche, welcher der Außenoberfläche der Dichtung 30 angepasst ist, die in die Aufnahmenut 23 eingepasst ist. Insbesondere an der zum Domdeckeloberteil 10 hin gewandten Seite, wo Dichtung 30 und Aufnahmenut 23 aneinander liegen, sind die Oberflächenformen aneinander angepasst. In Richtung des Randes der Öffnung 21 ist die Dichtung 30 dabei zum Domdeckeloberteil 10 hin gebogen, sodass sie in aufgeblasenem Zustand auf dem Rand der Öffnung 21 aufliegt, im Zustand mit Unterdruck jedoch nicht den Rand der Öffnung 21 berührt. Die Dichtung 30 hat einen gasgefüllten Innenraum 31.

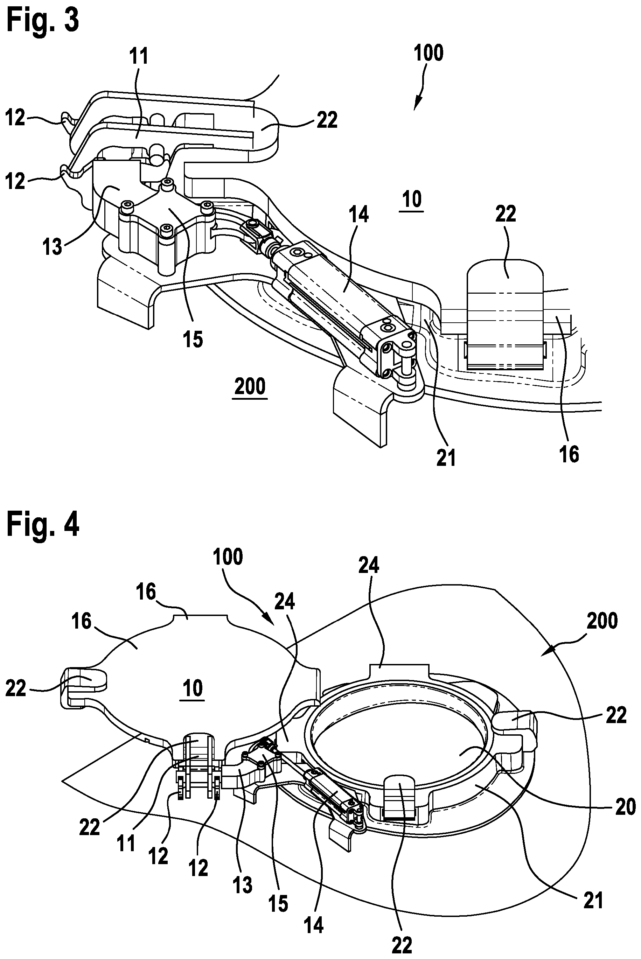

Figur 3 zeigt dabei vergrößert die Seite des Domdeckels 100, an welcher der Schwenkmechanismus 11 mit Endanschlag 12 zum Aufklappen des Domdeckeloberteils 10 angeordnet ist. Der Schwenkmechanismus 11 kann dabei den das Domdeckeloberteil 10 vertikal Klappen. Der Schwenkarm 13 ist zwischen dem Schwenkmechanismus 11 und einem doppelreihigem Schrägkugellager 15 angeordnet. Der Schwenkarm 13 schwenkt das Domdeckeloberteil 10 in paralleler Lage zur Oberfläche des Behälters 200, also horizontal. Sowohl der Schwenkmechanismus 11 als auch der Schwenkarm 13 können mittels eines pneumatischen Antriebs 14 betrieben werden. Im geschlossenen Zustand ist der Greifer 22 auf der Oberfläche des Domdeckeloberteils 10 im Bereich des Domdeckelrands 16 und an der Seite des Randes der Öffnung 21 des Behälters 200 angeordnet, um ein Aufklappen des Domdeckels 100 zu verhindern.

Figur 4 zeigt die in Figur 3 beschriebenen Merkmale und außerdem einen Domdeckel 100 im geöffneten Zustand, wobei sowohl das Domdeckeloberteil 100 als auch der Rand beziehungsweise der Stutzen der Öffnung 21 je zwei Greifer 22 aufweisen. Das Domdeckeloberteil 10 ist am Schwenkmechanismus 11 befestigt und wurde mit dem Schwenkarm 13 zur Seite horizontal zur Oberfläche des Behälters 200 bewegt. Der pneumatische Antrieb 14 ist dabei neben dem Stutzen der Öffnung 21 und dem Schrägkugellager 15 des Schwenkarms 13 angeordnet.

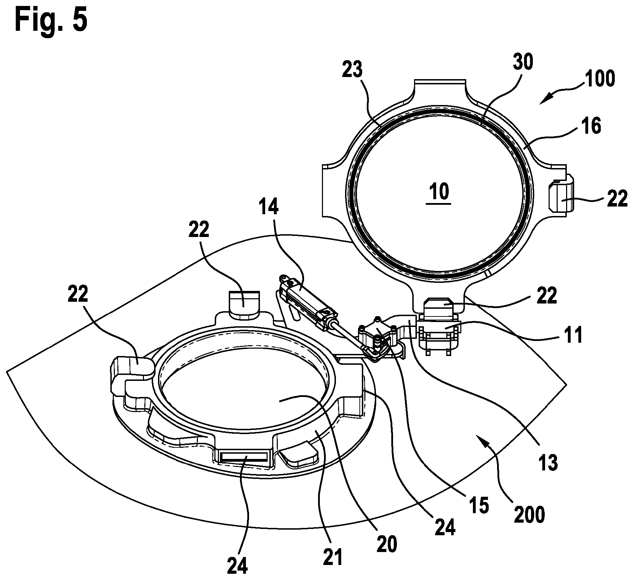

In Figur 5 wird der Domdeckel in aufgeklapptem Zustand gezeigt, wobei der Rand der Öffnung 21 zwei Greifer 22 aufweist und zwei Ausnehmungen 24 umfasst. Die Ausnehmungen 24 sind dabei hervorstehend, das heißt, sie sind nicht in den Rand der Öffnung 21 eingelassen, sondern bilden einen innen hohlen Fortsatz am Rand der Öffnung 21. Das Domdeckeloberteil 10 ist am Schwenkmechanismus 11 bis zum Endanschlag 12 geklappt. Dabei sieht man auf der Unterseite des Domdeckeloberteils 10 die Aufnahmenut 23, in welcher sich die Dichtung 30 befindet. Der Domdeckel 100 verfügt zudem auch über einen Greifer 22, welcher im geschlossenen Zustand auf der gleichen Position am Rand der Öffnung 21 zu liegen kommt, wie die Ausnehmung 24.

### Bezugszeichen

- 100: Domdeckel
- 200: Behälter

- 10: Domdeckeloberteil
- 11: Schwenkmechanismus
- 12: Endanschlag
- 13: Schwenkarm
- 14: pneumatischer Antrieb
- 15: Schrägkugellager des Drehgelenks
- 16: Domdeckelrand

- 20: Öffnung des Behälters
- 21: Rand/Stutzen der Öffnung
- 22: Greifer
- 23: Aufnahmenut
- 24: Ausnehmung

- 30: Dichtung
- 31: gasgefüllter Innenraum

## Patentansprüche

1. Domdeckel (100) zum Verschließen einer Öffnung (20) eines Behälters (200) und Behälter (200) mit einer Öffnung (20), insbesondere auf einem Fahrzeug,
wobei der Domdeckel (100) umfasst:
ein Domdeckeloberteil (10);
ein am Behälter (200) beziehungsweise am Rand der Öffnung des Behälters befestigtes Drehgelenk zum Verschwenken des Domdeckeloberteils horizontal zur Behälteroberfläche und
einen Schwenkmechanismus (11) eingerichtet zum Klappen des Domdeckeloberteils (10) in einen zur Behälteroberfläche vertikalen Zustand,
wobei das Domdeckeloberteil (10) einen äußeren Domdeckelrandbereich (16) umfasst,
wobei in diesem Domdeckelrandbereich (16) an der Unterseite des Domdeckeloberteils (10) eine Dichtung (30) angeordnet ist, um im Zusammenwirken mit einem Rand (21) oder Stutzen (21) der Öffnung (20) die Öffnung (20) im geschlossenen Zustand abzudichten,
wobei der Domdeckel einen Schwenkarm (13), verbunden mit dem Drehgelenk und dem Domdeckeloberteil (10) umfasst, wobei der Schwenkarm (13) durch den Schwenkmechanismus (11) mit dem Domdeckeloberteil (10) verbunden ist **gekennzeichnet dadurch,**
**dass** im Drehgelenk ein, insbesondere doppelreihiges, Schrägkugellager (15) ausgebildet ist und
**dass** der Schwenkmechanismus vertikal verstellbar ausgebildet ist damit beim Verschleiß der Dichtung eine Nachsteuerbarkeit gegeben ist, und der Schwenkmechanismus einen Endanschlag besitzt, welcher verhindert, dass das Domdeckeloberteil zu weit ausgelenkt wird.

2. Behälter (200) mit Domdeckel (100) gemäß Anspruch 1,
**gekennzeichnet dadurch,**
**dass** das Domdeckeloberteil (10) eine Aufnahmenut (23) auf der Unterseite des Domdeckeloberteils (10) aufweist und die Dichtung (30) teilweise in die Aufnahmenut (23) eingelassen ist.

3. Behälter (200) mit Domdeckel (100) gemäß Anspruch 2,
**gekennzeichnet dadurch,**
**dass** die Dichtung (30) einen hohlen Querschnitt aufweist.

4. Behälter (200) mit Domdeckel (100) gemäß Anspruch 3,
**gekennzeichnet dadurch,**
**dass** die Dichtung (30) eine Luftversorgung aufweist, welche mit einer Steuerung verbunden ist, wobei mittels der Luftversorgung in der Dichtung (30) Druck aufgebaut und reduziert werden kann.

5. Behälter (200) mit Domdeckel (100) gemäß Anspruch 4,
**gekennzeichnet dadurch,**
**dass** die Dichtung (30) vor dem Öffnen des Domdeckeloberteils (10) über die Steuerung mit Unterdruck beaufschlagbar ist, sodass die Dichtung (30) sich in die Aufnahmenut (23) an der Unterseite des Domdeckeloberteils (10) zurückzieht.

6. Behälter (200) mit Domdeckel (100) gemäß einem der Ansprüche 2 bis 5,
**gekennzeichnet dadurch,**
**dass** das Domdeckeloberteil (10) zur Wartung aufstellbar ausgebildet ist, wobei die Dichtung (30) des Domdeckels (100) in der aufgestellten Position des Domdeckeloberteils (10) überprüft und/oder getauscht werden kann.

7. Behälter (200) mit Domdeckel (100) gemäß Anspruch,
**gekennzeichnet dadurch,**
**dass** das Drehgelenk des Domdeckels (100) das Domdeckeloberteil (10) freischwebend hält und/oder das Domdeckeloberteil (10) nicht über eine Führungsschiene für die Verschwenkung verfügt.

8. Behälter (200) mit Domdeckel (100) gemäß einem der vorhergehenden Ansprüche,
**gekennzeichnet dadurch,**
**dass** das Drehgelenk bzw. der Schwenkmechanismus (11) über einen pneumatischen oder elektrischen Antrieb (14) verfügt.

9. Behälter (200) mit Domdeckel (100) gemäß einem der vorhergehenden Ansprüche,
**gekennzeichnet dadurch,**
**dass** der Domdeckelrand (16) des Domdeckeloberteils (10) mindestens einen überstehenden Greifer (22) aufweist, der im geschlossenen Zustand des Domdeckeloberteils (10) in eine Ausnehmung (24) am Rand (21) der Öffnung (20) greift.

10. Behälter (200) mit Domdeckel (100) gemäß einem der vorhergehenden Ansprüche,
**gekennzeichnet dadurch,**
**dass** der Rand (21) der Öffnung (20) mindestens einen Greifer (22) aufweist, unter den der Domdeckelrand (16) beim Verschließen einschwenkt.

11. Fahrzeug, insbesondere zur Verwendung auf Straßen oder Schienen,
**gekennzeichnet dadurch,**
**dass** das Fahrzeug einen Behälter (200) mit einem Domdeckel (100) gemäß einem der Ansprüche 1 - 10 umfasst.

## Claims

1. Dome cover (100) for closing an opening (20) of a container (200) and container (200) with an opening (20), in particular on a vehicle,
wherein the dome cover (100) comprises:
an upper part of the dome cover (10);
a swivel joint attached to the container (200) or to the edge of the opening of the container for swiveling the upper part of the dome cover horizontally to the container surface, and
a swivel mechanism (11) for folding the upper part of the dome cover (10) into a vertical state relative to the container surface,
wherein the upper part of the dome cover (10) comprises an outer dome cover edge region (16),
wherein a seal (30) is arranged in this dome cover edge region (16) on the underside of the upper part of the dome cover (10) in order to seal the opening (20) in the closed state in cooperation with an edge (21) or nozzle (21) of the opening (20),
wherein the dome cover comprises a swivel arm (13) connected to the swivel joint and the upper part of the dome cover (10), wherein the swivel arm (13) is connected to the upper part of the dome cover (10) by the swivel mechanism (11) **characterized in that**
an angular contact ball bearing (15), in particular a double-row angular contact ball bearing, is formed in the swivel joint, and
**in that** the swivel mechanism is formed vertically adjustable so that it can be readjusted when the seal is worn, and the swivel mechanism has an end stop which prevents the upper part of the dome cover from being deflected too far .

2. Container (200) with dome cover (100) according to claim 1,
**characterized in that**
the upper part of the dome cover (10) has a receiving groove (23) on the underside of the upper part of the dome cover (10) and the seal (30) is partially recessed in the receiving groove (23).

3. Container (200) with dome cover (100) according to claim 2,
**characterized in that**
the seal (30) has a hollow cross-section.

4. Container (200) with dome cover (100) according to claim 3,
**characterized in that**
the seal (30) has an air supply which is connected to a controller, wherein pressure can be built up and reduced in the seal (30) by means of the air supply.

5. Container (200) with dome cover (100) according to claim 4,
**Characterized in that**,
the seal (30) can be subjected to negative pressure via the controller before the upper part of the dome cover (10) is opened, so that the seal (30) retracts into the receiving groove (23) on the underside of the upper part of the dome cover (10).

6. Container (200) with dome cover (100) according to one of claims 2 to 5,
**characterized in that**
the upper part of the dome cover (10) is former so that it can be set up for maintenance, wherein the seal (30) of the dome cover (100) can be checked and/or replaced in the set-up position of the upper part of the dome cover (10).

7. Container (200) with dome cover (100) according to claim 1,
**characterized in that**,
the swivel joint of the dome cover (100) keeps the upper part of the dome cover (10) in a free-floating position and/or the upper part of the dome cover (10) does not have a guide rail for swiveling.

8. Container (200) with dome cover (100) according to one of the preceding claims, **characterized in that**
the swivel joint or the swivel mechanism (11) has a pneumatic or electric drive (14).

9. Container (200) with dome cover (100) according to one of the preceding claims, **characterized in that**,
the dome cover edge (16) of the upper part of the dome cover (10) has at least one projecting gripper (22) which, in the closed state of the upper part of the dome cover (10), engages in a recess (24) at the edge (21) of the opening (20).

10. Container (200) with dome cover (100) according to one of the preceding claims, **characterized in that**,
the edge (21) of the opening (20) has at least one gripper (22), under which the dome cover edge (16) swings in during closing.

11. Vehicle, especially for use on roads or rails,
**characterized in that**
the vehicle comprises a container (200) with a dome cover (100) according to one of claims 1 - 10.

## Revendications

1. Couvercle de dôme (100) pour fermer une ouverture (20) d'un récipient (200) et récipient (200) avec une ouverture (20), en particulier sur un véhicule,
le couvercle de dôme (100) comprenant :
une partie supérieure de couvercle de dôme (10) ;
une articulation pivotante fixée au récipient (200) ou au bord de l'ouverture du récipient pour faire pivoter la partie supérieure du couvercle de dôme horizontalement par rapport à la surface du récipient, et
un mécanisme de pivotement (11) conçu pour faire basculer la partie supérieure du couvercle de dôme (10) dans un état vertical par rapport à la surface du récipient,
la partie supérieure du couvercle de dôme (10) comprenant une zone de bordure extérieure du couvercle de dôme (16),
un joint d'étanchéité (30) étant disposé dans cette zone de bordure de couvercle de dôme (16) sur la face inférieure de la partie supérieure de couvercle de dôme (10) afin de rendre étanche l'ouverture (20) à l'état fermé en coopération avec un bord (21) ou une tubulure (21) de l'ouverture (20),
le couvercle de dôme comprenant un bras pivotant (13) relié à l'articulation pivotante et à la partie supérieure du couvercle de dôme (10), le bras pivotant (13) étant relié à la partie supérieure du couvercle de dôme (10) par le mécanisme de pivotement (11).
**caractérisé en ce que**
un roulement à billes à contact oblique (15), en particulier à double rangée, est formé dans l'articulation pivotante, et
le mécanisme de pivotement est conçu de manière à pouvoir être réglé verticalement afin de pouvoir être réajusté en cas d'usure du joint, et le mécanisme de pivotement possède une butée de fin de course qui empêche que la partie supérieure du couvercle de dôme ne soit déviée trop loin .

2. Récipient (200) avec couvercle de dôme (100) selon la revendication 1,
**caractérisé en ce que**
la partie supérieure de couvercle de dôme (10) présente une rainure de réception (23) sur la face inférieure de la partie supérieure de couvercle de dôme (10) et le joint d'étanchéité (30) est partiellement encastré dans la rainure de réception (23).

3. Récipient (200) avec couvercle de dôme (100) selon la revendication 2,
**caractérisé en ce que**
le joint d'étanchéité (30) présente une section transversale creuse.

4. Récipient (200) avec couvercle de dôme (100) selon la revendication 3,
**caractérisé en ce que**
le joint (30) présente une alimentation en air qui est reliée à une commande, l'alimentation en air permettant d'établir et de réduire la pression dans le joint (30).

5. Récipient (200) avec couvercle de dôme (100) selon la revendication 4,
**caractérisé en ce que**
le joint (30) peut être soumis à une dépression par l'intermédiaire de la commande avant l'ouverture de la partie supérieure du couvercle de dôme (10), de sorte que le joint (30) se retire dans la rainure de réception (23) sur la face inférieure de la partie supérieure du couvercle dôme (10).

6. Récipient (200) avec couvercle de dôme (100) selon l'une des revendications 2 à 5,
**caractérisé en ce que**
la partie supérieure de couvercle de dôme (10) est configurée de manière à pouvoir être relevée pour l'entretien, le joint d'étanchéité (30) du couvercle de dôme (100) pouvant être contrôlé et/ou remplacé dans la position relevée de la partie supérieure de couvercle de dôme (10).

7. Récipient (200) avec couvercle de dôme (100) selon la revendication 1,
**caractérisé en ce que**
l'articulation pivotante du couvercle de dôme (100) maintient la partie supérieure de couvercle de dôme (10) en suspension libre et/ou la partie supérieure de couvercle de dôme (10) ne dispose pas d'un rail de guidage pour le pivotement.

8. Récipient (200) avec couvercle de dôme (100) selon l'une des revendications précédentes,
**caractérisé en ce que**
l'articulation rotative ou le mécanisme de pivotement (11) dispose d'un entraînement pneumatique ou électrique (14).

9. Récipient (200) avec couvercle de dôme (100) selon l'une des revendications précédentes,
**caractérisé en ce que**
le bord (16) du couvercle de dôme de la partie supérieure du couvercle de dôme (10) présente au moins une griffe (22) en saillie qui, à l'état fermé de la partie supérieure du couvercle de dôme (10), s'engage dans un évidement (24) sur le bord (21) de l'ouverture (20).

10. Récipient (200) avec couvercle de dôme (100) selon l'une des revendications précédentes,
**caractérisé en ce que**
le bord (21) de l'ouverture (20) présente au moins une griffe (22) sous laquelle le bord du couvercle de dôme (16) pivote lors de la fermeture.

11. Véhicule, notamment destiné à être utilisé sur des routes ou des voies ferrées, **caractérisé en ce que**
le véhicule comprend un récipient (200) avec un couvercle de dôme (100) selon l'une des revendications 1 à 10.
